# EUROPEAN PATENT APPLICATION

(11) **EP 4 336 343 A1**
(43) Date of publication of application: **13.03.2024**
(21) Application number: 22194628.8
(22) Date of filing: 08.09.2022
(51) Int. Cl.: G06F 3/16

(54) **DEVICE CONTROL**

(71) Applicant: Nokia Technologies Oy, 02610 Espoo (FI)
(72) Inventor: LEHTINIEMI, Arto Juhani, Lempäälä (FI); SALMIMAA, Marja Pauliina, Tampere (FI); JÄRVENPÄÄ, Toni Johan, Akaa (FI)
(74) Representative: Nokia EPO representatives

(57) **Abstract**

An apparatus comprising means for:
receiving at least one input comprising information indicative of audio volumes of a plurality of audio outputs at an output device, wherein information to provide the audio outputs is provided to the output device by a plurality of devices;
determining a change in relative volumes of the audio volumes of the plurality of audio outputs; and
modifying, based at least in part on the determined change in relative volumes, at least one characteristic of a user interface associated with the plurality of audio outputs.

## Description

### TECHNOLOGICAL FIELD

Examples of the disclosure relate to device control. Some relate to device control associated with output of a plurality of audio outputs.

### BACKGROUND

Some electronic devices, such as some mobile devices and/or some wearable devices, are configured to perform audio output.

For example, some electronic devices are configured to output a plurality of audio outputs simultaneously.

It would be desirable to improve device control associated with and/or during output of a plurality of audio outputs simultaneously.

### BRIEF SUMMARY

According to various, but not necessarily all, embodiments there is provided an apparatus comprising means for:
receiving at least one input comprising information indicative of audio volumes of a plurality of audio outputs at an output device, wherein information to provide the audio outputs is provided to the output device by a plurality of devices;
determining a change in relative volumes of the audio volumes of the plurality of audio outputs; and
modifying, based at least in part on the determined change in relative volumes, at least one characteristic of a user interface associated with the plurality of audio outputs.

In some examples, the user interface comprises an audio component and/or a visual component, and wherein modifying at least one characteristic of the user interface comprises modifying at least one characteristic of the audio component and/or modifying at least one characteristic of the visual component.

In some examples, the audio component of the user interface comprises the plurality of audio outputs at the output device, and wherein modifying at least one characteristic of the user interface comprises modifying at least one characteristic of the plurality of audio outputs at the output device.

In some examples, modifying at least one characteristic of the plurality of audio outputs comprises modifying audio rendering of the plurality of audio outputs

In some examples, modifying audio rendering of the plurality of audio outputs comprises introducing or modifying spatial audio rendering.

In some examples, the visual component of the user interface comprises a plurality of visual user interfaces associated with different ones of the plurality of audio outputs and wherein modifying at least one characteristic of the user interface comprises modifying at least one characteristic of the plurality of visual user interfaces.

In some examples, modifying at least one characteristic of the plurality of visual user interfaces comprises emphasizing a first visual user interface and de-emphasizing a second, different visual user interface.

In some examples, modifying at least one characteristic of the plurality of visual user interfaces comprises changing functionality of one or more of the visual user interfaces.

In some examples, modifying at least one characteristic of the plurality of visual user interfaces comprises changing functionality of a plurality of the visual user interfaces.

In some examples, changing functionality of a plurality of the visual user interfaces comprises increasing functionality provided by a first visual user interface and reducing functionality provided by a second, different visual user interface.

In some examples, modifying at least one characteristic of the plurality of visual user interfaces comprises at least one of:
modifying visual appearance of a plurality of visual user interfaces;
modifying placement of a plurality of visual user interfaces; and
enabling and/or disabling visual content.

In some examples, determining a change in relative volumes of the audio volumes of the plurality of audio outputs comprises determining that the audio volume of an audio output has increased relative to one or more other of the audio outputs and/or determining that the audio volume of an audio output has decreased relative to one or more other of the audio outputs.

In some examples, the means comprises
at least one processor; and
at least one memory including computer program code,
the at least one memory storing instructions that, when executed by the at least one processor, cause performance of the apparatus.

According to various, but not necessarily all, embodiments there is provided a method comprising:
receiving at least one input comprising information indicative of audio volumes of a plurality of audio outputs at an output device, wherein information to provide the audio outputs is provided to the output device by a plurality of devices;
determining a change in relative volumes of the audio volumes of the plurality of audio outputs; and
modifying, based at least in part on the determined change in relative volumes, at least one characteristic of a user interface associated with the plurality of audio outputs.

In some examples, the user interface comprises an audio component and/or a visual component, and wherein modifying at least one characteristic of the user interface comprises modifying at least one characteristic of the audio component and/or modifying at least one characteristic of the visual component.

According to various, but not necessarily all, embodiments there is provided a computer program comprising instructions for causing an apparatus to perform:
receiving at least one input comprising information indicative of audio volumes of a plurality of audio outputs at an output device, wherein information to provide the audio outputs is provided to the output device by a plurality of devices;
determining a change in relative volumes of the audio volumes of the plurality of audio outputs; and
modifying, based at least in part on the determined change in relative volumes, at least one characteristic of a user interface associated with the plurality of audio outputs.

According to various, but not necessarily all, examples there is provided examples as claimed in the appended claims.

According to various, but not necessarily all, embodiments there is provided an apparatus comprising
at least one processor; and
at least one memory including computer program code;
the at least one memory storing instructions that, when executed by the at least one processor, cause the apparatus at least to perform at least a part of one or more methods disclosed herein.

According to various, but not necessarily all, embodiments there is provided an apparatus comprising means for performing at least part of one or more methods disclosed herein.

The description of a function should additionally be considered to also disclose any means suitable for performing that function.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION

Some examples will now be described with reference to the accompanying drawings in which:
FIG. 1 shows an example of the subject matter described herein;
FIG. 2 shows another example of the subject matter described herein;
FIG. 3A shows another example of the subject matter described herein;
FIG. 3B shows another example of the subject matter described herein;
FIG. 3C shows another example of the subject matter described herein;
FIG. 3D shows another example of the subject matter described herein;
FIG. 4 shows another example of the subject matter described herein;
FIG. 5 shows another example of the subject matter described herein;
FIG. 6 shows another example of the subject matter described herein;
FIG. 6A shows another example of the subject matter described herein;
FIG. 7 shows another example of the subject matter described herein;
FIG. 8 shows another example of the subject matter described herein;
FIG. 9A shows another example of the subject matter described herein; and
FIG. 9B shows another example of the subject matter described herein.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

### DETAILED DESCRIPTION

Examples of the disclosure relate to apparatus, methods, and/or computer programs for and/or involved in device control.

Examples of the disclosure relate to apparatus, methods, and/or computer programs for and/or involved in control of a user interface associated with and/or related to output of a plurality of audio outputs.

The following description and FIGs describe various examples of an apparatus 10 comprising means for:
receiving at least one input 12 comprising information 14 indicative of audio volumes of a plurality of audio outputs 16 at an output device 18, wherein information to provide 20 the audio outputs 16 is provided to the output device 18 by a plurality of devices 22;
determining a change in relative volumes of the audio volumes of the plurality of audio outputs 16; and
modifying, based at least in part on the determined change in relative volumes, at least one characteristic 24 of a user interface 26 associated with the plurality of audio outputs 16.

The means can comprise at least one processor; and at least one memory including computer program code; the at least one memory storing instructions that, when executed by the at least one processor, cause the performance of the apparatus.

As used herein, an apparatus and/or device and/or component for performing one or more actions should also be considered to disclose an apparatus and/or device and/or component configured to perform the one or more actions.

Similarly, as used herein, an apparatus and/or device and/or component configured to perform one or more actions should also be considered to disclose an apparatus and/or device and/or component for performing the one or more actions.

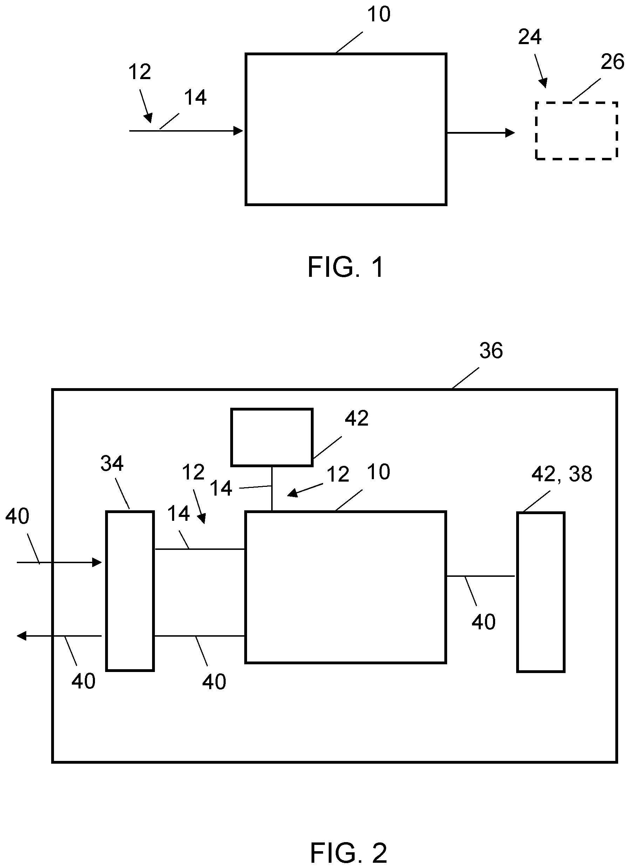

FIG. 1 schematically illustrates an example of an apparatus 10.

Various features referred to in relation to FIG. 1 can be found in the other FIGs.

In the example of FIG. 1, the apparatus 10 is configured to receive at least one input 12 comprising information 14 indicative of audio volumes of a plurality of audio outputs 16 at an output device 18, wherein information to provide 20 the audio outputs 16 is provided to the output device 18 by a plurality of devices 22.

The apparatus 10 can be comprised and/or integrated in a device or devices, which can be considered an electronic device 36 or devices 36.

The apparatus 10 can be comprised and/or integrated in any suitable device or devices.

For example, the apparatus 10 can be comprised and/or integrated in any suitable device or devices controlled during performance of one or more methods described herein, such as an output device 18 and/or one or more of the plurality of devices 22 and so on.

For example, the apparatus 10 can be comprised and/or integrated in a device that is separate from, but configured to communicate with, any suitable device or devices controlled during performance of one or more methods described herein, such as a separate, control device.

Accordingly, the at least one input 12 can be received from at least one device that is separate from a device comprising the apparatus and/or from at least one component of a device comprising the apparatus.

In some examples, it can be considered that the at least one input 12 is received from an external source and/or an internal source.

The apparatus 10 can be considered a device and/or electronic device 36.

In examples, the apparatus 10 is configured to determine a change in relative volumes of the audio volumes of the plurality of audio outputs 16.

Determining a change in relative volumes of the audio volumes of the plurality of audio outputs 16 can comprise determining that the audio volume of an audio output 16 has increased relative to one or more other of the audio outputs 16 and/or determining that the audio volume of an audio output 16 has decreased relative to one or more other of the audio outputs 16.

In examples, the apparatus 10 is configured to modify, based at least in part on the determined change in relative volumes, at least one characteristic 24 of a user interface 26 associated with the plurality of audio outputs 16.

The user interface 26 can comprise an audio component 28 and/or a visual component 30, and modifying at least one characteristic 24 of the user interface 26 can comprise modifying at least one characteristic 24 of the audio component 28 and/or modifying at least one characteristic 24 of the visual component 30.

The audio component 28 of the user interface 26 can comprise the plurality of audio outputs 16 at the output device 18, and modifying at least one characteristic 24 of the user interface 26 can comprise modifying at least one characteristic 24 of the plurality of audio outputs 16 at the output device 18.

Modifying at least one characteristic 24 of the plurality of audio outputs 16 can comprise modifying audio rendering of the plurality of audio outputs 16.

Modifying audio rendering of the plurality of audio outputs 16 can comprise introducing or modifying spatial audio rendering.

In examples, the visual component 30 of the user interface 26 comprises a plurality of visual user interfaces 32 associated with different ones of the plurality of audio outputs 16 and modifying at least one characteristic 24 of the user interface 26 comprises modifying at least one characteristic 24 of the plurality of visual user interfaces 32.

Modifying at least one characteristic 24 of the plurality of visual user interfaces 32 can comprise emphasizing a first visual user interface de-emphasizing a second, different visual user interface.

Modifying at least one characteristic 24 of the plurality of visual user interfaces 32 can comprise changing functionality of one or more of the visual user interfaces 32.

Modifying at least one characteristic 24 of the plurality of visual user interfaces 32 can comprise changing functionality of a plurality of the visual user interfaces 32.

Changing functionality of a plurality of the visual user interfaces 32 can comprise increasing functionality provided by a first visual user interface 32 and reducing functionality provided by a second, different visual user interface 32.

Modifying at least one characteristic 24 of the plurality of visual user interfaces 32 can comprise at least one of:
modifying visual appearance of a plurality of visual user interfaces 32;
modifying placement of a plurality of visual user interfaces 32; and
enabling and/or disabling visual content.

In examples, the apparatus 10 can comprise any number of additional elements not illustrated in the example of FIG. 1.

FIG. 2 schematically illustrates an example of an electronic device 36.

In the example of FIG. 2, the electronic device 36 comprises an apparatus 10 as described in relation to FIG. 1.

In some examples, the electronic device 36 comprises at least one transceiver 34, and/or at least one component 42, and/or means for outputting 38.

The electronic device 36 can comprise any suitable electronic device 36. For example, the electronic device 36 can comprise an output device 18, and/or a device of the plurality of devices 22, and/or a control device and so on.

The electronic device 36 can be and/or comprise any suitable personal device, and/or any suitable mobile device, and/or any suitable wearable device and so on.

In examples, the electronic device 36 can be considered an apparatus.

The at least one transceiver 34 can comprise any suitable transceiver 34 or transceivers 34. For example, the at least one transceiver 34 can comprise any suitable transceiver(s) 34 for transmitting and/or receiving one or more signals 40.

In examples, the at least one transceiver 34 is configured to transmit and/or receive one or more signals 40 using wired and/or wireless communication. Any suitable wired and/or wireless communication protocol(s) can be used. For example, Wi-Fi and/or Bluetooth can be used.

In some examples, one or more separate transmitters and receivers can be used.

In examples, the at least one transceiver 34 is configured to receive one or more signals 40 and transmit to the apparatus 10 the at least one input 12 comprising information 14 indicative of audio volume of at least one audio output 18.

In examples, the at least one transceiver 34 is configured to receive information 20 to provide one or more audio outputs 16.

The at least one component 42 can comprise any suitable component 42 or components 42 of the electronic device 36. For example, the at least one component 42 can comprise any suitable component(s) 42 configured to provide at least one input 12 comprising information 14 indicative of audio volume of at least one audio output 18. For example, the at least one component 42 can comprise a volume control of the electronic device 36.

Accordingly, in examples the at least one input 12 can be received via the transceiver 34 and/or from the component 42.

In examples, the at least one component 42 can comprise any suitable component to provide information 20 to provide an audio output 16.

In some examples, the component 42 can be considered an internal component of the electronic device 36.

The means for outputting 38 can comprise any suitable means for outputting a user interface 26 associated with a plurality of audio outputs 16.

The means for outputting 38 can be considered at least one output, at least one output mechanism, output circuitry, at least one component configured to output, and/or at least one user interface and so on.

In examples, the means for outputting 38 comprises means for outputting an audio component 28 and/or a visual component 30 of the user interface 26. For example, the means for outputting can comprise at least one speaker and/or at least one display and so on.

The means for outputting 38 can be configured to output audio outputs 16. Accordingly, in examples, the electronic device 36 can be considered an output device 18.

The means for outputting 38 can, in examples, be considered a component 42 of the electronic device 36.

In examples, the apparatus 10 can provide at least one signal 40 to the means for outputting 38 to modify at least one characteristic 24 of the user interface 26.

Additionally, or alternatively, in examples the apparatus 10 can provide at least one signal 40 to the at least one transceiver 34 to modify at least one characteristic 24 of the user interface 26 at a separate device.

In examples, the electronic device 36 can comprise any number of additional elements not illustrated in the example of FIG 2. For example, the electronic device 32 can comprise one or more sensors.

As illustrated in the example of FIG. 2, the at least one transceiver 34, the component 42 and the means for outputting 38 are operationally coupled to the apparatus 10 and any number of intervening elements can exist between them (including no intervening elements).

Additionally, or alternatively, one or more elements of the electronic apparatus 36 illustrated in the example of FIG. 2 can be integrated or combined.

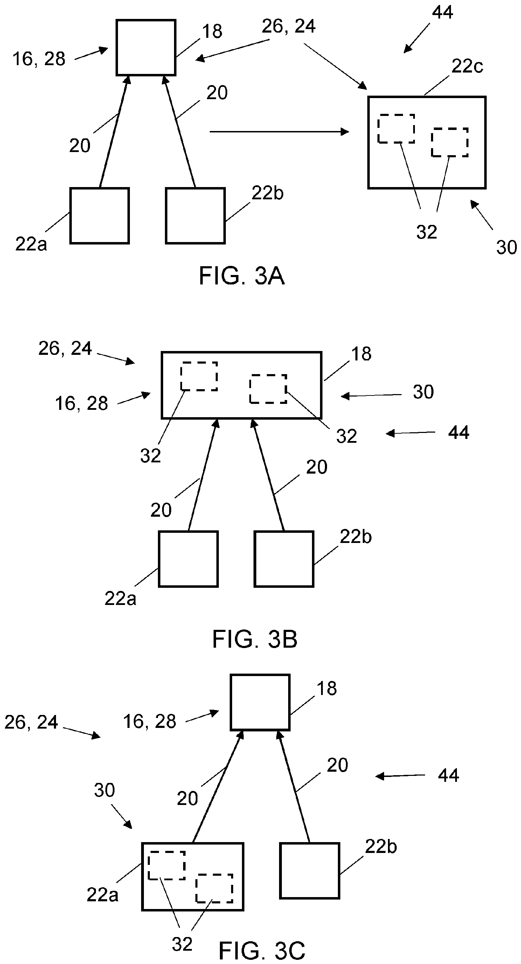

FIGs 3A to 3D schematically illustrate examples of systems 44.

In the example of FIG. 3A an output device 18 outputs a plurality of audio outputs 16. Information 20 to provide the audio outputs 16 is provided to the output device 18 by a plurality of devices 22a, 22b. The plurality of devices 22a, 22b can be considered audio sources.

In the example of FIG. 3A, a separate device 22c provides a plurality of visual user interfaces 32 associated with the plurality of audio outputs 16.

The audio outputs 16 and/or visual user interfaces 32 form at least part of a user interface 26 having at least one characteristic 24.

The audio outputs 16 can be considered an audio component 28 of the user interface 26 and the visual user interfaces 32 can be considered a visual component 30 of the user interface 26.

In examples, apparatus 10 of the example of FIG. 1 can be comprised in any of the devices in the system 44 of FIG 3A.

In examples, apparatus 10 of the example of FIG. 1 can be comprised in any combination of the devices in the system 44 of FIG 3A.

In examples, apparatus 10 of the example of FIG. 1 can be at least partially comprised in a device separate from the devices in the system 44 of FIG. 3A (not illustrated in the example of FIG. 3A).

In examples, the electronic device 36 of the example of FIG. 2 can be any of the devices in the system 44 of FIG. 3A.

The example of FIG. 3B is similar to the example of FIG. 3A. However, in the example of FIG. 3B, the output device 18 also provides a plurality of visual user interfaces 32 associated with the plurality of audio outputs 16.

In examples, apparatus 10 of the example of FIG. 1 can be comprised in any of the devices in the system 44 of FIG 3B.

In examples, apparatus 10 of the example of FIG. 1 can be comprised in any combination of the devices in the system 44 of FIG 3B.

In examples, apparatus 10 of the example of FIG. 1 can be at least partially comprised in a device separate from the devices in the system 44 of FIG. 3B (not illustrated in the example of FIG. 3B).

In examples, the electronic device 36 of the example of FIG. 2 can be any of the devices in the system 44 of FIG. 3B.

The example of FIG. 3C is similar to the example of FIG. 3A. However, in the example of FIG. 3C, the device/audio source 22a also provides a plurality of visual user interfaces 32 associated with the plurality of audio outputs 16.

In examples, apparatus 10 of the example of FIG. 1 can be comprised in any of the devices in the system 44 of FIG 3C.

In examples, apparatus 10 of the example of FIG. 1 can be comprised in any combination of the devices in the system 44 of FIG 3C.

In examples, apparatus 10 of the example of FIG. 1 can be at least partially comprised in a device separate from the devices in the system 44 of FIG. 3C (not illustrated in the example of FIG. 3C).

In examples, the electronic device 36 of the example of FIG. 2 can be any of the devices in the system 44 of FIG. 3C.

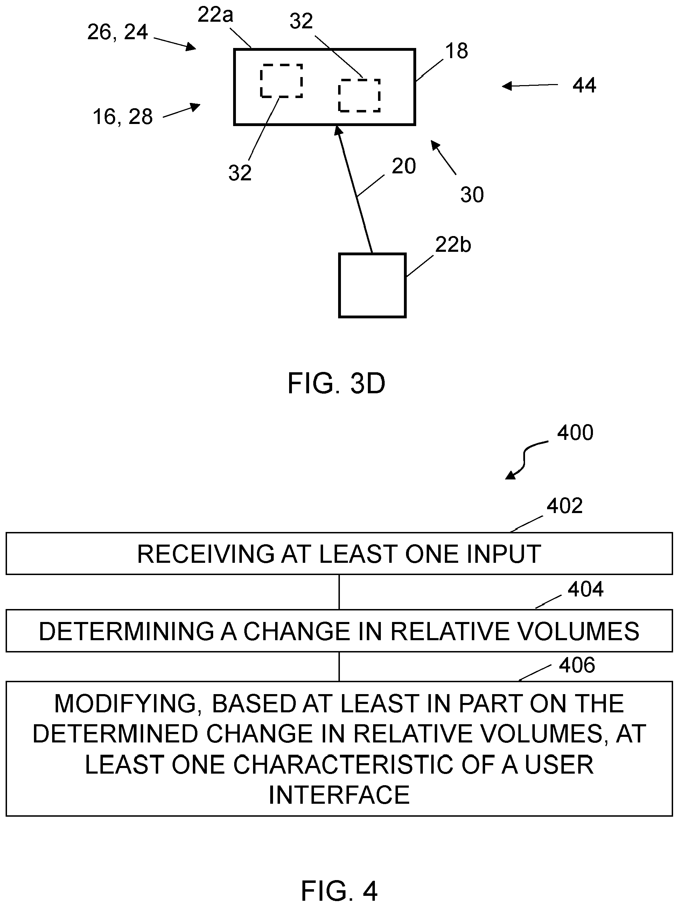

The example of FIG. 3D is similar to the example of FIG. 3A. However, in the example of FIG. 3D, the output device 18 also provides a plurality of visual user interfaces 32 associated with the plurality of audio outputs 16 and acts as device/audio source 22a.

In examples, apparatus 10 of the example of FIG. 1 can be comprised in any of the devices in the system 44 of FIG 3D.

In examples, apparatus 10 of the example of FIG. 1 can be comprised in any combination of the devices in the system 44 of FIG 3D.

In examples, apparatus 10 of the example of FIG. 1 can be at least partially comprised in a device separate from the devices in the system 44 of FIG. 3D (not illustrated in the example of FIG. 3C).

In examples, the electronic device 36 of the example of FIG. 2 can be any of the devices in the system 44 of FIG. 3D.

Although the plurality of visual user interfaces 32 are provided by a single device in the examples of FIGs 3A to 3D, in examples the plurality of visual user interfaces 32 can be provided by a plurality of devices, for example a plurality of devices illustrated in the systems 44 of the illustrated examples.

The examples illustrated in FIGs 3A to 3D can comprise any number of other devices. For example, one or more additional devices 22/audio sources can be included.

FIG. 4 illustrates an example of a method 400.

One or more of the features discussed in relation to FIG. 4 can be found in one or more of the other FIGs.

In examples, method 400 can be considered a method of device control.

In examples, method 400 can be considered a method of improving and/or enhancing control of a user interface.

In examples, method 400 can be considered a method of modifying a user interface during simultaneous output of a plurality of audio outputs.

Method 400 can be performed by any suitable apparatus comprising any suitable means for performing the method 400.

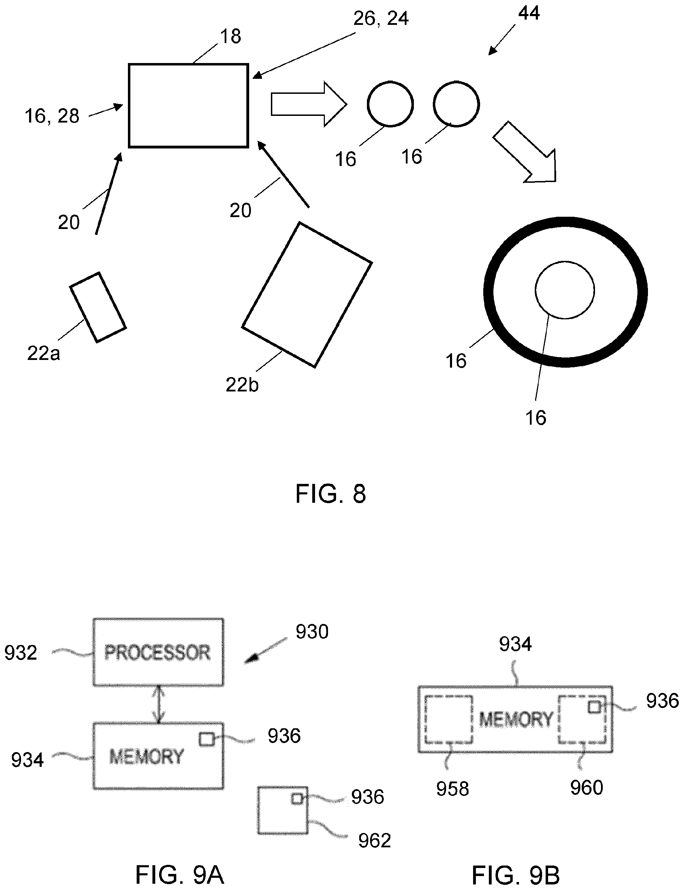

In examples, method 400 can be performed by the apparatus of FIGs 9A and 9B and/or the apparatus of FIG. 1 and/or the electronic device of FIG. 2.

At block 402, method 400 comprises receiving at least one input 12 comprising information 14 indicative of audio volumes of a plurality of audio outputs 16 at an output device 18, wherein information 20 to provide the audio outputs 16 is provided to the output device 18 by a plurality of devices 22.

Block 402 can be performed in any suitable way using any suitable method.

In examples, receiving at least one input 12 comprises receiving at least one signal and/or message comprising information 14.

The at least one input 12 can be received from any suitable source or sources. For example, the at least one input 12 can be received from any suitable device(s) and/or component(s) of a device. For example, the at least one input 12 can be received from at least one source external to a device and/or from at least one source internal to a device.

The at least one input 12 can have any suitable form. For example, the at least one input 12 can have any suitable form to provide information 14 indicative of audio volumes of a plurality of audio outputs 16 at an output device 18.

In examples, different ones of the at least one input 12 can have different forms. For example, input(s) 12 from external source(s) can have a different form to input(s) 12 from internal source(s).

In some examples, the at least one input 12 comprises at least one signal and/or message comprising information 14.

The at least one input 12 can be caused by and/or comprise information of at least one input made by a user. For example, the at least one input 12 can be caused by and/or comprise information of at least one input made by a user to change the audio volume of at least one audio output 16.

The information 14 indicative of audio volumes of a plurality of audio outputs 16 at an output device 18 can comprise any suitable information.

In examples, the information 14 can comprise the audio volumes of the audio outputs 16 at the output device 18 and/or information that can be processed to determine the audio volumes of the audio outputs 16 at the output device 18.

The plurality of audio outputs 16 can comprise any suitable audio outputs 16.

In examples, an audio output 16 can be considered any output comprising one or more audio components.

In examples, an audio output 16 can be considered any output comprising one or more sound components.

In examples, an audio output 16 can be considered any output comprising one or more components that can be heard by a user.

For example, an audio output 16 can comprise one or more songs, and/or one or more videos, and/or one or more audiobooks and so on.

An audio volume of an audio output 16 can be considered a measure and/or indication of how loud an audio output 16 is being output by an audio device 18. For example, an audio volume of an audio output 16 can provide an indication of how loud, for example in decibels (dB), an audio output 16 is being output by an output device 18 and/or can provide an indication of an audio volume level for the audio output 16 at the audio device 18 such as a number on a scale of 1 to 10 and so on.

The output device 18 can comprise any suitable device. For example, the output device 18 can comprise any suitable device configured to output the plurality of audio outputs 18.

The output device 18 can comprise any suitable electronic device such as a mobile telephone, a computer, a laptop, a wearable device, a virtual reality headset, a television, and/or a music player and so on.

As discussed above, in examples, information 20 to provide the audio outputs 16 is provided to the output device 18 by a plurality of devices 22. Accordingly, it can be considered that the output device 18 receives the information 20 to provide the audio outputs 16 from a plurality of devices 22.

The information 20 can be provided to/received by the output device 18 in any suitable way using any suitable method.

In examples, providing/receiving the information 20 to provide the audio outputs 16 comprises receiving at least one signal and/or message comprising information 20.

The information 20 to provide the audio outputs 16 can have any suitable form and/or can comprise any suitable information.

In examples, the information 20 can comprise any suitable information to allow the output device 18 to output the audio outputs 16. Such information might include audio content to be output as the audio outputs 16, such as one or more audio streams, one or more files containing audio content, and/or a reference to a source of audio content such as a file stored locally on the output device 18 or on a remote server.

In examples, it can be considered that the information 20 to output the audio outputs 16 is streamed from the plurality of devices 22 to the output device 18 to allow the audio outputs 16 to be played by the output device 18.

The plurality of devices 22 can comprise any suitable devices. For example, the plurality of devices 22 can comprise any suitable devices configured to provide information 20 to an output device 18 to provide audio outputs 18 at the output device 18. The plurality of devices 22 can be considered audio sources.

The plurality of devices 22 can comprise different types of devices.

The plurality of devices 22 can comprise any suitable electronic device such as a mobile telephone, a computer, a laptop, a wearable device, a virtual reality headset, a television, and/or a music player and so on.

In examples, the output device 18 can be a device of the plurality of devices 22/audio source. Accordingly, in examples, output device 18 acts as an audio source for at least one audio output 16 at the output device 18. See, for example, FIG. 3D.

At block 404, method 400 comprises determining a change in relative volumes of the audio volumes of the plurality of audio outputs 16.

In examples, block 404 can comprise determining a change in audio volume balance of the audio volumes of the plurality of audio outputs 16.

Block 404 can be performed in any suitable way using any suitable method.

In examples, determining a change in relative volumes of the audio volumes of the plurality of audio outputs 16 comprises processing the information 14 indicative of audio volumes of the plurality of audio outputs 16.

In examples, determining a change in relative volumes of the audio volumes of the plurality of audio outputs 16 comprises determining that at least one audio volume of the plurality of audio outputs 16 has changed relative to at least one other audio volume of the plurality of audio outputs 16.

In some examples, determining a change in relative volumes of the audio volumes of the plurality of audio outputs 16 comprises determining that the audio volume of an audio output 16 has increased relative to one or more other of the audio outputs 16 and/or determining that the audio volume of an audio output 16 has decreased relative to one or more other of the audio outputs 16.

For example, block 404 can comprise determining that a user has changed the relative volumes of the audio volumes of the plurality of audio outputs 16.

At block 406, method 400 comprises modifying, based at least in part on the determined change in relative volumes, at least one characteristic 24 of a user interface 26 associated with the plurality of audio outputs 16.

Consequently, FIG. 4 illustrates a method 400 comprising:
receiving at least one input 12 comprising information 14 indicative of audio volumes of a plurality of audio outputs 16 at an output device 18, wherein information 20 to provide the audio outputs 16 is provided to the output device 18 by a plurality of devices 20;
determining a change in relative volumes of the audio volumes of the plurality of audio outputs 18; and
modifying, based at least in part on the determined change in relative volumes, at least one characteristic 24 of a user interface 26 associated with the plurality of audio outputs 16.

Block 406 can be performed in any suitable way using any suitable method.

In examples, block 406 can be considered to comprise controlling modification, based at least in part on the determined change in relative volumes, of at least one characteristic 24 of a user interface 26 associated with the plurality of audio outputs 16.

In examples, block 406 can be considered to comprise controlling at least one device to modify, based at least in part on the determined change in relative volumes, at least one characteristic 24 of a user interface 26 associated with the plurality of audio outputs 16.

Block 406 can comprise transmitting one or more signals and/or messages comprising information. For example, block 406 can comprise transmitting one or more control signals to at least one device and/or at least one component of a device to modify at least one characteristic 24 of a user interface 26 associated with the plurality of audio outputs 16.

The user interface 26 can comprise any suitable user interface 26. For example, the user interface 26 can comprise any suitable user interface 26 associated with the plurality of audio outputs 16.

A user interface 26 can be considered to be associated with the plurality of audio outputs 16 because the user interface 26 has a link to and/or is related to at least one of the audio outputs 16.

In examples, a user interface 26 can be considered to be associated with the plurality of audio outputs 16 because there is a control and/or information link between the user interface 26 and least one of the audio outputs 16. For example, the user interface 26 can provide control of at least one of the audio outputs 16 and/or the user interface 26 can provide information related to at least one of the audio outputs 16.

In examples, a user interface 26 can be considered to be associated with the plurality of audio outputs 16 because the user interface 26 comprises at least one of the audio outputs 16.

The user interface 26 can comprise one or more components configured to be sensed by a user and/or one or more components to allow a user to control at least one of the audio outputs 16.

In examples, a characteristic 24 of an entity can be considered any aspect and/or feature of the entity.

For example, a characteristic of the user interface 26 can be considered any aspect and/or feature of the user interface 26 that can be modified and/or altered and/or changed.

For example, a characteristic 24 of the user interface 26 can be considered any visual and/or audio aspect and/or feature of the user interface 26.

For example, a characteristic 24 of the user interface 26 can be a size, and/or position, and/or look, and/or functionality, and/or rendering of the user interface 26 and so on.

In some examples, the user interface 26 comprises an audio component 28 and/or visual component 30, and wherein modifying at least one characteristic 24 of the user interface 26 comprises modifying at least one characteristic 24 of the audio component 28 and/or modifying at least one characteristic 24 of the visual component 30.

The audio component 28 of the user interface 26 can comprise any suitable audio component 28. For example, the audio component 28 can comprise any audio component 28 of the user interface 26 configured to provide information to a user and/or to facilitate control of one or more of the the audio outputs 16 at the output device 18.

In some examples, the audio component 28 of the user interface 26 comprises the plurality of audio outputs 16 at the output device 18, and wherein modifying at least one characteristic 24 of the user interface 26 comprises modifying at least one characteristic 24 of the plurality of the audio outputs 16 at the output device 18.

Any suitable characteristic 24 or characteristics 24 of the plurality of audio outputs 16 can be modified in any suitable way. For example, output of at least one of the plurality of audio outputs 16 can be modified and/or altered and/or changed in any suitable way based, at least in part, on the determined change in relative volumes.

In examples, modifying at least one characteristic 24 of the plurality of audio outputs 16 comprises modifying audio rendering of the plurality of audio outputs 18.

Audio rendering of the plurality of audio outputs 18 can be modified and/or altered and/or changed in any suitable way. For example, audio rendering of the plurality of audio outputs 18 can be modified and/or altered and/or changed in any suitable way to adapt to a determined change in relative volumes of the audio volumes of the plurality of audio outputs 16.

In examples, modifying audio rendering of the plurality of audio outputs 16 comprises introducing or modifying spatial audio rendering.

For example, an increase in volume for an audio output 16 from a first device/audio source 22 can change the rendering of audio streams from mono/stereo to spatial and the positioning can reflect the relative volumes between the audio outputs 16 for better audibility.

Accordingly, in examples, a change in relative volumes of the audio volumes of the plurality of audio outputs 16 can change output rendering beyond volume change. For example, rendering mode can be switched, and/or spatial positioning can be modified and so on to reflect the change in relative volumes.

In examples, modifying audio rendering of the plurality of audio outputs 16 can be performed based, at least in part, on the content type of one or more audio outputs 16.

Accordingly, in examples, method 400 comprises determining a content type of one or more audio outputs 16 and modifying audio rendering of the plurality of audio outputs 16 based, at least in part, on the determined content type and determined change in relative volumes of the audio volumes of the plurality of audio outputs 16.

For example, rendering mode can be switched and/or spatial positioning can be modified and so on to optimize the consumption of the determined content type(s) with the new relative volumes.

Determining a content type can be performed in any suitable way, using any suitable method. For example, information about the content type can be retrieved using application type (for example audio book application, music player and so on), available meta data and/or audio analysis.

For example, a user may be listening, at the same time, to two audio outputs 16 at an output device 18: music, from a first device, and an audio book, from a second device, and may increase the music volume. The increase in volume of the music may mask the audio book substantially.

In such examples, spatial rendering of the audio outputs 16 can be changed/introduced to render the audio book inside the user's head (not externalized) and the music rendered spatially to allow the user to better hear both audio outputs with the new relative volumes. See, for example, FIG. 8.

In examples, modifying audio rendering of the plurality of audio outputs 16 comprises at least one of:
switching to spatial, stereo or mono rendering;
changing a codec used and/or changing a bitrate used;
modification of audio panning;
modification of equalization; and
modification of reverberation.

As discussed above, in some examples, the user interface 26 comprises an audio component 28 and/or visual component 30, and wherein modifying at least one characteristic 24 of the user interface 26 comprises modifying at least one characteristic 24 of the audio component 28 and/or modifying at least one characteristic 24 of the visual component 30.

The visual component 30 of the user interface 26 can comprise any suitable visual component 30. For example, the visual component 30 can comprise any visual component 30 of the user interface 26 configured to provide information to a user and/or to facilitate control of one or more of the audio outputs 16 at the output device 18.

In some examples, the visual component 30 of the user interface 26 comprises a plurality of visual user interfaces 32 associated with different ones of the plurality of audio outputs 16 and wherein modifying at least one characteristic 24 of the user interface 26 comprises modifying at least one characteristic 24 of the plurality of visual user interfaces 32.

Accordingly, in examples, a change in relative volumes of the audio volumes of the plurality of audio outputs 16 gets reflected to the visual user interfaces 32 associated with the plurality of audio outputs 16.

The plurality of visual user interfaces 32 can have any suitable form. For example, the plurality of visual user interfaces can 32 comprise at least part of any suitable graphical user interface or graphical user interfaces.

The plurality of visual user interfaces 32 can be separate or combined.

For example, the plurality of visual user interfaces 32 can comprise separate windows comprising at least one graphical user interface.

Additionally, or alternatively, the plurality of visual user interfaces 32 can comprise different parts and/or components of a single combined graphical user interface.

Any suitable characteristic 24 or characteristics 24 of the plurality of visual user interfaces 32 can be modified in any suitable way. For example, at least one of the plurality of visual user interfaces 32 can be modified and/or altered and/or changed in any suitable way based, at least in part, on the determined change in relative volumes.

In some examples, modifying at least one characteristic 24 of the plurality of visual user interfaces 32 comprises emphasizing a first visual user interface 32 and de-emphasizing a second, different visual user interface 32.

Emphasizing, similarly de-emphasizing, a visual user interface 32 can be performed in any suitable way.

Emphasizing a visual user interface 32 can comprise modifying and/or altering and/or changing a visual user interface 32 to make the visual user interface more prominent on a display and/or to provide increased functionality of the visual user interface 32.

For example, emphasizing a visual user interface 32 can comprise enlarging the visual user interface 32 and/or modifying a position of the visual user interface 32, and/or modifying an appearance of the visual user interface 32 and/or providing additional information functionality and/or control functionality of at least one of the audio outputs 16 of/via the visual user interface 32 and so on.

De-emphasizing a visual user interface 32 can comprise modifying and/or altering and/or changing a visual user interface 32 to make the visual user interface less prominent on a display and/or to provide increased functionality of the visual user interface 32.

For example, de-emphasizing a visual user interface 32 can comprise reducing in size the visual user interface 32 and/or modifying a position of the visual user interface 32, and/or modifying an appearance of the visual user interface 32 and/or reducing information functionality and/or control functionality of at least one of the audio outputs 16 of/via the visual user interface 32 and so on.

Accordingly, if an audio volume of an audio output 16 is increased relative to one or more other audio outputs 16, an associated visual user interface 32 can be emphasized in some way to reflect the change in relative volumes of the audio volumes of the plurality of audio outputs 16.

Additionally, or alternatively, if an audio volume of an audio output 16 is decreased relative to one or more other audio outputs 16, an associated visual user interface 32 can be de-emphasized in some way to reflect the change in relative volumes of the audio volumes of the plurality of audio outputs 16.

In some examples, modifying at least one characteristic 24 of the plurality of visual user interfaces 32 comprises changing functionality of one or more of the visual user interfaces 32.

In examples, modifying at least one characteristic 24 of the plurality of visual user interfaces 32 comprises changing functionality provided by one or more of the visual user interfaces 32.

In examples, modifying at least one characteristic 24 of the plurality of visual user interfaces comprises changing information functionality and/or control functionality of at least one of the audio outputs 16 of/via at least one visual user interface 32.

In some examples, modifying at least one characteristic 24 of the plurality of visual user interfaces 32 comprises changing functionality of a plurality of the visual user interfaces 32.

Changing functionality of and/or provided by one or more of the visual user interfaces 32 can be performed in any suitable way.

Functionality of and/or provided by one or more of the visual user interfaces 32 can be modified and/or altered and/or changed in any suitable way. For example, functionality of and/or provided by one or more of the visual user interfaces 32 can be modified and/or altered and/or changes in any suitable way to adapt to a determined change in relative volumes of the audio volumes of the plurality of audio outputs 16.

Changing functionality of and/or provided by a visual user interface 32 can comprise changing what and/or to what extent features of an entity controlled by the visual user interface 32 can be controlled and/or changing what information is provided about the entity.

For example, changing functionality of and/or provided by a visual user interface 32 associated with at least one audio output 16 can comprise changing what and/or to what extent features of the associated at least one audio output 16 can be controlled by the visual user interface and/or changing what information is displayed about the at least one audio output 16.

For example, a number and/or type of controls provided by the visual user interface 32 and/or amount and/or type of information that is displayed by the visual user interface 32 can be changed.

In some examples, changing functionality of a plurality of the visual user interfaces 32 comprises increasing functionality provided by a first visual user interface 32 and reducing functionality provided by a second, different visual user interface 32.

Increasing functionality provided by a visual user interface 32 can comprise modifying the visual user interface 32 to provide functionality that was not provided prior to the modification.

Decreasing functionality provided by a visual user interface 32 can comprise modifying the visual user interface 32 to remove functionality that was present prior to the modification.

For example, an increase in volume for an audio output 16 from a first device/audio source 22 can change the visual user interface rendering and content for the first device/audio source 22 and, at least, a second, different device/audio source 22. The visual user interfaces 32 can be rendered on a third device, such as an augmented reality headset.

For example, increasing the volume may increase the size of the respective visual user interface 32 and/or bring more options visible/available and vice versa.

Accordingly, in examples, a change in relative volumes of the audio volumes of the plurality of audio outputs 16 can change one or more associated visual user interfaces 32.

For example, a user may be listening, at the same time, to two audio outputs 16 at an output device 18, such as a pair of earbuds.

The user may adjust the volume of an audio output 16 from a first device 22 and a second device 22 and the relative volumes/output balance is a combination of the two streams.

In examples, a third device may show the visual user interfaces of the first and second devices 22.

The user may increase the volume on the second device 22, which changes the relative volumes/audio balance between the audio outputs 16 of the first and second devices 22.

In examples, the change of relative volumes is reflected to the visual user interfaces 32 to support the action. For example, there may be a change in the visual user interface(s) size and/or a change in the functionality and/or feature(s) of the visual user interface(s) 32.

In examples, modifying at least one characteristic of the plurality of visual user interfaces 32 comprises at least one of:
modifying visual appearance of a plurality of visual user interfaces;
modifying placement of a plurality of visual user interfaces; and
enabling and/or disabling visual content.

Examples of the disclosure are advantageous and/or provide technical benefits.

For example, examples of the disclosure provide for a change in multi-stream volume to be reflected in a user interface, to for example, adjust information and/or control provision appropriately and/or to adjust audio rendering appropriately.

For example, a change in relative volumes of audio volumes of a plurality of audio outputs can be reflected in functionality of at least one associated visual user interface.

For example, a change in relative volumes of audio volumes of a plurality of audio outputs can be reflected in the audio rendering of the audio outputs beyond the volume difference, for example rendering mode, spatial audio rendering and so on.

For example, adapting a Ul, for example relative sizes of Uls on a display, to emphasize a UI of an audio source that is more audibly prominent allows more information/controls relative to the audibly prominent audio source to automatically be made quickly and easily accessible by a user.

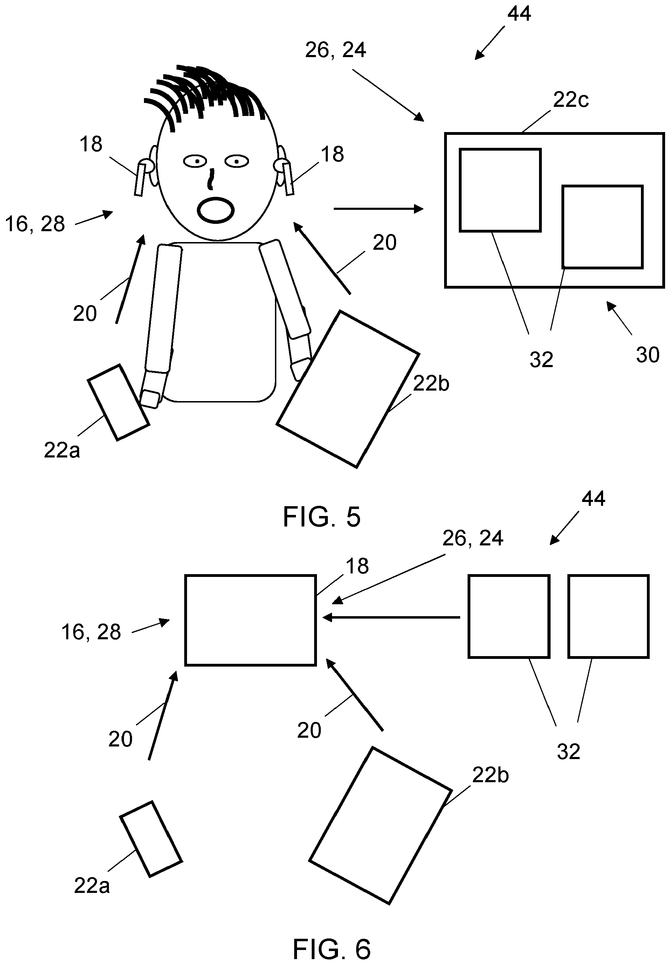

FIG. 5 schematically illustrates an example of a system 44.

In the example of FIG. 5, a user has two devices, Device #1 22a and Device #2 22b, playing back audio to a single output device 18, which in this example is a pair of earbuds. Multi-Stream BT or other similar techniques can be used to support this multi-stream output.

The user may adjust the volume of Device #1 22a and Device #2 22b and the output balance is a combination of these individual audio streams.

In this example setup, there is a third device 22c, a laptop, that shows the visual user interfaces 32 of Device #1 22a and Device #2 22b. These visual user interfaces 32 may be transmitted using Cloud/Web, wirelessly (e.g., AirPlay), physical cable and any combination of these. In common multi-device scenarios, for example Web-based user interfaces are used.

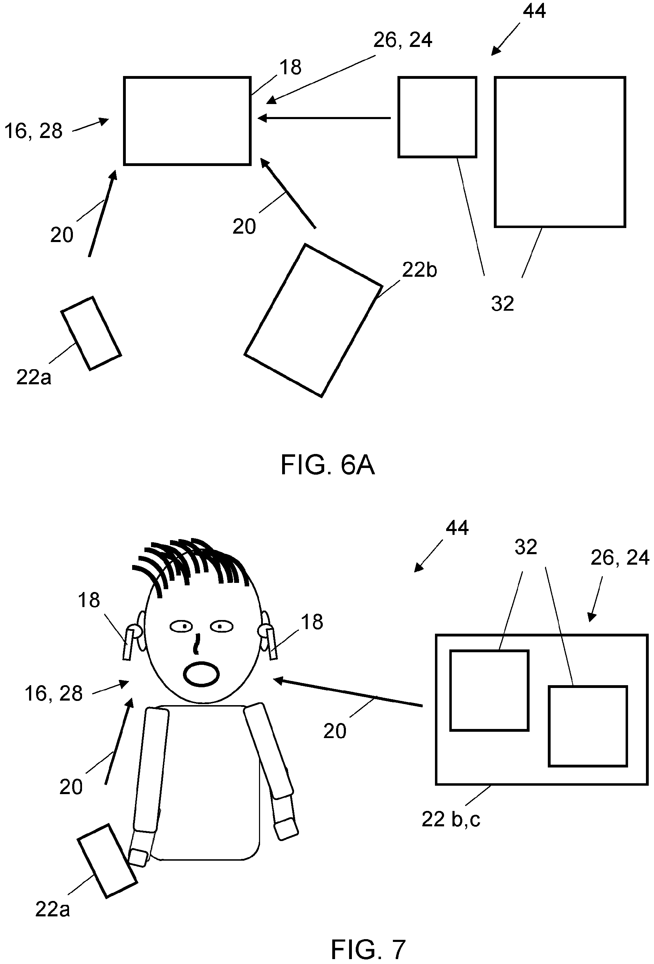

In this example, the audio output 16 could also be from the laptop 22c and then the visual user interfaces 32 would be shown from the same device which is then similar to the example of FIG. 6.

In examples, apparatus 10 of the example of FIG. 1 can be comprised in any of the devices in the system 44 of FIG 5.

In examples, apparatus 10 of the example of FIG. 1 can be comprised in any combination of the devices in the system 44 of FIG 5.

In examples, apparatus 10 of the example of FIG. 1 can be at least partially comprised in a device separate from the devices in the system 44 of FIG. 5 (not illustrated in the example of FIG. 5).

In examples, the electronic device 36 of the example of FIG. 2 can be any of the devices in the system 44 of FIG. 5.

FIG. 6 schematically illustrates an example of a system 44.

FIG. 6 shows another example setup similar to the example of FIG. 5 but in the example of FIG. 6 the output device for both audio and visual is an AR/VR headset. Accordingly, in the example of FIG. 6, the audio playback and the visual user interfaces 32 are coming from the same device 18.

In this example, Device #1 can be a mobile phone (Device #1) in the pocket/hand and then the user pressing the physical volume buttons to adjust the audio (and thus change the relative volumes) and then the visual user interfaces 32 in the AR/VR headset would adapt.

In examples, apparatus 10 of the example of FIG. 1 can be comprised in any of the devices in the system 44 of FIG 6.

In examples, apparatus 10 of the example of FIG. 1 can be comprised in any combination of the devices in the system 44 of FIG 6.

In examples, apparatus 10 of the example of FIG. 1 can be at least partially comprised in a device separate from the devices in the system 44 of FIG. 6 (not illustrated in the example of FIG. 6).

In examples, the electronic device 36 of the example of FIG. 2 can be any of the devices in the system 44 of FIG. 6.

FIG. 6A schematically illustrates an example of a system 44.

The system 44 illustrated in the example of FIG. 6A is the system 44 of FIG. 6. However, in the example of FIG. 6A, in the proposed setup, the user increases volume on Device #2. This changes the audio balance between #1 and #2 devices.

The change of balance (i.e., Device #2 audio stream becoming louder) is now also reflected to the output device visual user interfaces 32 to support the action. There may be change in the visual UI size but also in the functionality and features of the visual UI 32.

In an example scenario Device #1 of FIG. 6A is playing back a movie and Device #2 is playing back a teleconference. Now when the user increases the volume of the teleconference from Device #2 and it starts to be louder than the movie, the teleconference window 32 may become larger and include more details such as increased amount of video feeds etc.

The other visual user interface 32 showing the movie may become smaller and based on the difference of audio stream volumes may start displaying subtitles to be better able to follow it in the new conditions.

FIG. 7 schematically illustrates an example of a system 44.

FIG. 7 shows an alternative setup to that of FIGs 5 and 6. In the example of FIG. 7, the device 22c displaying the visual user interfaces 32 is also acting as the second audio source 22b.

Furthermore, in the AR/VR headset example of FIG. 6/6A similarly the headset could act as one audio source and the balance/volumes would be adjusted from the mobile device (Device #1) and the headset. The visual user interface modifications would be rendered on the AR/VR headset. These setup alternatives show the potential and large applicability of examples of the disclosure across different device configurations.

In examples, apparatus 10 of the example of FIG. 1 can be comprised in any of the devices in the system 44 of FIG 7.

In examples, apparatus 10 of the example of FIG. 1 can be comprised in any combination of the devices in the system 44 of FIG 7.

In examples, apparatus 10 of the example of FIG. 1 can be at least partially comprised in a device separate from the devices in the system 44 of FIG. 7 (not illustrated in the example of FIG. 7).

In examples, the electronic device 36 of the example of FIG. 2 can be any of the devices in the system 44 of FIG. 7.

FIG. 8 schematically illustrates an example of a system 44.

FIG. 8 illustrates an example where audio rendering is modified based on the audio input balance of two devices.

In the example of FIG. 8, the user increases volume for Device #1 22a (music) while listening to audio book with Device #2 22b. Now with the change, the music is masking audio book listening quite a bit and the system 44 switches to more suitable rendering to support this.

In this example, the audio book (speech) is moved to be rendered inside user's head (not externalized) and the music rendered spatially. Now with this set balance, the user is better able to enjoy both of the audio streams.

Audio rendering modification can be done based on the volume balance and with the information of the content being consumed. Information about the content may be retrieved using application type (e.g., audio book application etc), available meta data and audio analysis and classification of the audio stream.

In this example, if the music would have been mono for some reason and not being able to spatialize well, the system 44 could have increased left-right panning of the content instead to enable differentiation of the signals.

Same type of processing could be applied when both of the content types are similar, such as speech.

In spatial audio rendering, panning to more front and back (more relevant to the front) using head tracking would be a well working way to be able to better follow both of the streams. The amount of panning could be proportional to the difference in balance of the audio streams.

Example audio rendering modifications include (but are not limited to):
- Switching audio rendering between spatial, stereo and mono
- Changing used codec and/or bitrate based on the required change in the overall rendering, e.g., if an audio signal is played back with very low volume it maybe beneficial to use lower bitrate and, e.g., mono rendering and vice versa optimizing quality of the most dominant signal.
- Modification of audio panning, including also 360 panning in the case of spatial audio, e.g., front back.
- Modification of EQ of the audio streams to reduce overlap
- Modification of reverberation of the signals. This allows for pushing signals further away or bringing them closer to the user in spatial rendering.

In examples, apparatus 10 of the example of FIG. 1 can be comprised in any of the devices in the system 44 of FIG 8.

In examples, apparatus 10 of the example of FIG. 1 can be comprised in any combination of the devices in the system 44 of FIG 8.

In examples, apparatus 10 of the example of FIG. 1 can be at least partially comprised in a device separate from the devices in the system 44 of FIG. 8 (not illustrated in the example of FIG. 8).

In examples, the electronic device 36 of the example of FIG. 2 can be any of the devices in the system 44 of FIG. 8.

In examples, instead of adjusting the volume levels through the dedicated controls of the audio source devices 22, the volume controls could be done using the output/third device controls. Such controls could be physical buttons, gesture tracking, voice control and so on.

In examples, instead of adjusting the volume levels, the desired adjustment could be something else. Such examples could include adjustment of audio equalizer (EQ) settings (e.g. visual UI adaptation based on bass level adjustment), Bluetooth connection settings (e.g. visual UI change reflects the changed connection type), audio playback controls (e.g. spatial rendering changed after/while pausing playback or skipping a track on one device), and so on.

Fig 9 illustrates an example of a controller 930 suitable for use in an apparatus, such as apparatus 10 of FIG. 1 and/or FIG. 2. In examples, controller 930 can be considered an apparatus 10.

Implementation of a controller 930 may be as controller circuitry. The controller 930 may be implemented in hardware alone, have certain aspects in software including firmware alone or can be a combination of hardware and software (including firmware).

As illustrated in Fig 9A the controller 930 may be implemented using instructions that enable hardware functionality, for example, by using executable instructions of a computer program 936 in a general-purpose or special-purpose processor 932 that may be stored on a computer readable storage medium (disk, memory etc) to be executed by such a processor 932.

The processor 932 is configured to read from and write to the memory 934. The processor 932 may also comprise an output interface via which data and/or commands are output by the processor 932 and an input interface via which data and/or commands are input to the processor 932.

The memory 934 stores a computer program 936 comprising computer program instructions (computer program code) that controls the operation of the apparatus when loaded into the processor 932. The computer program instructions, of the computer program 936, provide the logic and routines that enables the apparatus to perform the methods illustrated in the accompanying Figs. The processor 932 by reading the memory 934 is able to load and execute the computer program 936.

The apparatus comprises:
at least one processor 932; and
at least one memory 934 including computer program code
the at least one memory 934 and the computer program code configured to, with the at least one processor 932, cause the apparatus at least to perform:
   receiving at least one input comprising information indicative of audio volumes of a plurality of audio outputs at an output device, wherein information to provide the audio outputs is provided to the output device by a plurality of devices;
   determining a change in relative volumes of the audio volumes of the plurality of audio outputs; and
   modifying, based at least in part on the determined change in relative volumes, at least one characteristic of a user interface associated with the plurality of audio outputs.

The apparatus comprises:
at least one processor 932; and
at least one memory 934 including computer program code,
the at least one memory storing instructions that, when executed by the at least one processor 932, cause the apparatus at least to:
   receive at least one input comprising information indicative of audio volumes of a plurality of audio outputs at an output device, wherein information to provide the audio outputs is provided to the output device by a plurality of devices;
   determine a change in relative volumes of the audio volumes of the plurality of audio outputs; and
   modify, based at least in part on the determined change in relative volumes, at least one characteristic of a user interface associated with the plurality of audio outputs.

As illustrated in Fig 9A, the computer program 936 may arrive at the apparatus via any suitable delivery mechanism 962. The delivery mechanism 962 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 936. The delivery mechanism may be a signal configured to reliably transfer the computer program 936. The apparatus may propagate or transmit the computer program 936 as a computer data signal.

Computer program instructions for causing an apparatus to perform at least the following or for performing at least the following:
receiving at least one input comprising information indicative of audio volumes of a plurality of audio outputs at an output device, wherein information to provide the audio outputs is provided to the output device by a plurality of devices;
determining a change in relative volumes of the audio volumes of the plurality of audio outputs; and
modifying, based at least in part on the determined change in relative volumes, at least one characteristic of a user interface associated with the plurality of audio outputs.

The computer program instructions may be comprised in a computer program, a non-transitory computer readable medium, a computer program product, a machine readable medium. In some but not necessarily all examples, the computer program instructions may be distributed over more than one computer program.

Although the memory 934 is illustrated as a single component/circuitry it may be implemented as one or more separate components/circuitry some or all of which may be integrated/removable and/or may provide permanent/semi-permanent/ dynamic/cached storage.

In examples the memory 934 comprises a random-access memory 958 and a read only memory 960. In examples the computer program 936 can be stored in the read only memory 958. See, for example, Fig. 9B.

In examples the memory 934 can be split into random access memory 958 and read only memory 960.

Although the processor 932 is illustrated as a single component/circuitry it may be implemented as one or more separate components/circuitry some or all of which may be integrated/removable. The processor 932 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory or memories that work together to cause an apparatus, such as a mobile phone or server, to perform various functions and
(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the accompanying Figs may represent steps in a method and/or sections of code in the computer program 936. The illustration of a particular order to the blocks does not necessarily imply that there is a required or preferred order for the blocks and the order and arrangement of the block may be varied.

Where a structural feature has been described, it may be replaced by means for performing one or more of the functions of the structural feature whether that function or those functions are explicitly or implicitly described.

Thus, the apparatus can comprise means for:
receiving at least one input comprising information indicative of audio volumes of a plurality of audio outputs at an output device, wherein information to provide the audio outputs is provided to the output device by a plurality of devices;
determining a change in relative volumes of the audio volumes of the plurality of audio outputs; and
modifying, based at least in part on the determined change in relative volumes, at least one characteristic of a user interface associated with the plurality of audio outputs.

In examples, an apparatus can comprise means for performing one or more methods, and/or at least part of one or more methods, as disclosed herein.

In examples, an apparatus can be configured to perform one or more methods, and/or at least part of one or more methods, as disclosed herein.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising means for:
receiving at least one input comprising information indicative of audio volumes of a plurality of audio outputs at an output device, wherein information to provide the audio outputs is provided to the output device by a plurality of devices;
determining a change in relative volumes of the audio volumes of the plurality of audio outputs; and
modifying, based at least in part on the determined change in relative volumes, at least one characteristic of a user interface associated with the plurality of audio outputs.

2. An apparatus as claimed in claim 1, wherein the user interface comprises an audio component and/or a visual component, and wherein modifying at least one characteristic of the user interface comprises modifying at least one characteristic of the audio component and/or modifying at least one characteristic of the visual component.

3. An apparatus as claimed in claim 2, wherein the audio component of the user interface comprises the plurality of audio outputs at the output device, and wherein modifying at least one characteristic of the user interface comprises modifying at least one characteristic of the plurality of audio outputs at the output device.

4. An apparatus as claimed in claim 3, wherein modifying at least one characteristic of the plurality of audio outputs comprises modifying audio rendering of the plurality of audio outputs.

5. An apparatus as claimed in claim 4, wherein modifying audio rendering of the plurality of audio outputs comprises introducing or modifying spatial audio rendering.

6. An apparatus as claimed in any preceding claim, wherein the visual component of the user interface comprises a plurality of visual user interfaces associated with different ones of the plurality of audio outputs and wherein modifying at least one characteristic of the user interface comprises modifying at least one characteristic of the plurality of visual user interfaces.

7. An apparatus as claimed in claim 6, wherein modifying at least one characteristic of the plurality of visual user interfaces comprises emphasizing a first visual user interface and de-emphasizing a second, different visual user interface.

8. An apparatus as claimed in claim 6 or 7, wherein modifying at least one characteristic of the plurality of visual user interfaces comprises changing functionality of one or more of the visual user interfaces.

9. An apparatus as claimed in claim 8, wherein modifying at least one characteristic of the plurality of visual user interfaces comprises changing functionality of a plurality of the visual user interfaces.

10. An apparatus as claimed in claim 9, wherein changing functionality of a plurality of the visual user interfaces comprises increasing functionality provided by a first visual user interface and reducing functionality provided by a second, different visual user interface.

11. An apparatus as claimed in any of claims 6 to 10, wherein modifying at least one characteristic of the plurality of visual user interfaces comprises at least one of:
modifying visual appearance of a plurality of visual user interfaces;
modifying placement of a plurality of visual user interfaces; and
enabling and/or disabling visual content.

12. An apparatus as claimed in any preceding claim, wherein determining a change in relative volumes of the audio volumes of the plurality of audio outputs comprises determining that the audio volume of an audio output has increased relative to one or more other of the audio outputs and/or determining that the audio volume of an audio output has decreased relative to one or more other of the audio outputs.

13. A method comprising:
receiving at least one input comprising information indicative of audio volumes of a plurality of audio outputs at an output device, wherein information to provide the audio outputs is provided to the output device by a plurality of devices;
determining a change in relative volumes of the audio volumes of the plurality of audio outputs; and
modifying, based at least in part on the determined change in relative volumes, at least one characteristic of a user interface associated with the plurality of audio outputs.

14. A method as claimed in claim 13, wherein the user interface comprises an audio component and/or a visual component, and wherein modifying at least one characteristic of the user interface comprises modifying at least one characteristic of the audio component and/or modifying at least one characteristic of the visual component.

15. A computer program comprising instructions for causing an apparatus to perform:
receiving at least one input comprising information indicative of audio volumes of a plurality of audio outputs at an output device, wherein information to provide the audio outputs is provided to the output device by a plurality of devices;
determining a change in relative volumes of the audio volumes of the plurality of audio outputs; and
modifying, based at least in part on the determined change in relative volumes, at least one characteristic of a user interface associated with the plurality of audio outputs.
